# EUROPEAN PATENT APPLICATION

(11) **EP 3 605 169 A1**
(43) Date of publication of application: **05.02.2020**
(21) Application number: 18772129.5
(22) Date of filing: 14.02.2018
(51) Int. Cl.: G02B 5/30, H04B 10/116

(54) **OPTICAL FILTER AND OPTICAL COMMUNICATION DEVICE**

(30) Priority: 24.03.2017 JP 2017058696
(71) Applicant: Nitto Denko Corporation, Ibaraki-shi, Osaka 567-8680 (JP)
(72) Inventor: NISHIMURA, Akinori, Ibaraki-shi Osaka 567-8680 (JP)
(74) Representative: Hoffmann Eitle
(86) International application number: PCT/JP2018/004990
(87) International publication number: WO 2018/173550

(57) **Abstract**

There is provided an optical filter that can improve the stability of optical communication when used in an optical communication apparatus. The optical filter includes a polarizing plate. The optical filter is used in a transmitter of an optical communication apparatus. In one embodiment, the optical filter further includes a λ/4 plate, wherein an angle formed by an absorption axis of the polarizer of the polarizing plate and a slow axis of the λ/4 plate is from 38° to 52°, and wherein the optical filter is used by being arranged so that the λ/4 plate is on a light-emitting element side of the transmitter.

## Description

### Technical Field

The present invention relates to an optical filter to be used in an optical communication apparatus and an optical communication apparatus.

### Background Art

Optical wireless communication using light has been attracting attention along with circumstances, such as the depletion of a wave band due to an increase in demand for wireless communication using a radio wave. In particular, along with the spread of a light-emitting element that can be modulated at a high speed, such as a LED, an attempt to put a visible light communication technology using visible light into practical use has been advanced. There has been proposed a method involving arranging a polarizing filter on a receiver side in an optical communication apparatus utilizing such optical communication technology to remove an ambient light component from light entering a receiver (Patent Literature 1).

### Citation List

### Patent Literature

[PTL 1] JP 2007-281882 A

### Summary of Invention

### Technical Problem

However, when such optical communication apparatus as described above is used under an environment where the influence of ambient light is large, such as the outdoors, there is a problem in that the stability of optical communication is insufficient. The present invention has been made in view of the problem, and an object of the present invention is to provide an optical filter that can improve the stability of optical communication when used in an optical communication apparatus, and an optical communication apparatus including such optical filter.

### Solution to Problem

An optical filter according to an embodiment of the present invention includes a polarizing plate. The optical filter is used in a transmitter of an optical communication apparatus.

In one embodiment of the present invention, the optical filter further includes a λ/4 plate, wherein the polarizing plate includes a polarizer and a protective layer arranged on at least one side of the polarizer, wherein an angle formed by an absorption axis of the polarizer and a slow axis of the λ/4 plate is from 38° to 52°, and wherein the optical filter is used by being arranged so that the λ/4 plate is on a light-emitting element side of the transmitter.

An optical filter according to another embodiment of the present invention includes a reflective polarizer. The optical filter is used in a transmitter of an optical communication apparatus .

In one embodiment of the present invention, the optical filter further includes a λ/4 plate, wherein an angle formed by a reflection axis of the reflective polarizer and a slow axis of the λ/4 plate is from 38° to 52°, and wherein the optical filter is used by being arranged so that the λ/4 plate is on a light-emitting element side of the transmitter.

In one embodiment of the present invention, the optical filter further includes a light-diffusing layer.

According to another aspect of the present invention, there is provided an optical communication apparatus. The optical communication apparatus includes the optical filter as described above.

In one embodiment of the present invention, the optical communication apparatus further includes a reflective plate.

In one embodiment of the present invention, the reflective plate has a reflectance of 40% or more.

### Advantageous Effects of Invention

According to the present invention, the optical filter that can improve the stability of optical communication when used in an optical communication apparatus, and the optical communication apparatus including such optical filter can be provided.

### Brief Description of Drawings

FIG. **1** is a schematic sectional view of an optical filter according to one embodiment of the present invention.
FIG. 2 is a schematic sectional view of an optical filter according to another embodiment of the present invention.
FIG. 3 is a schematic sectional view of an optical filter according to still another embodiment of the present invention.
FIG. 4 is a schematic perspective view of an example of a reflective polarizer that may be used in the optical filter of the present invention.

### Description of Embodiments

Embodiments of the present invention are described below. However, the present invention is not limited to these embodiments.

### (Definitions of Terms and Symbols)

The definitions of terms and symbols used herein are as described below.

### (1) Refractive Indices (nx, ny, and nz)

"nx" represents a refractive index in a direction in which an in-plane refractive index is maximum (that is, slow axis direction), "ny" represents a refractive index in a direction perpendicular to the slow axis in the plane (that is, fast axis direction), and "nz" represents a refractive index in a thickness direction.

### (2) In-plane Retardation (Re)

"Re(λ)" refers to an in-plane retardation measured at 23°C with light having a wavelength of λ nm. For example, "Re (550) " refers to an in-plane retardation measured at 23°C with light having a wavelength of 550 nm. The Re(λ) is determined from the equation "Re(λ) = (nx-ny) ×d" when the thickness of a layer (film) is represented by d (nm).

### A. Entire Configuration of Optical Filter

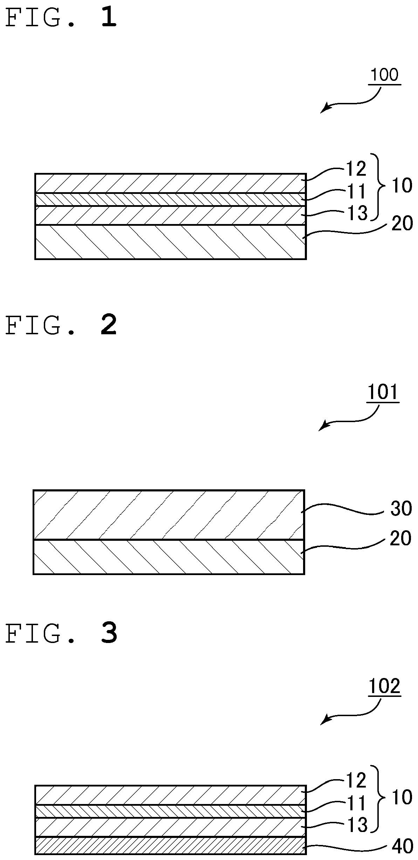

FIG. **1** is a schematic sectional view of an optical filter according to one embodiment of the present invention. An optical filter **100** includes a polarizing plate. A polarizing plate **10** typically includes an absorptive polarizer **11**, a first protective layer **12** laminated on one side of the polarizer **11**, and a second protective layer **13** laminated on the other side thereof. The optical filter **100** is used in the transmitter of an optical communication apparatus, and may be typically used in an optical communication apparatus including a transmitter and a receiver. When the optical filter **100** of this embodiment is used in the transmitter of an optical communication apparatus, light in a specific polarization state (polarization direction) is output from the transmitter. Therefore, when the light in the specific polarization state is selectively received on a receiver side, the influence of ambient light is reduced, and hence the stability of optical communication can be improved.

The optical filter **100** may be suitably used in a transmitter including a light-emitting element configured to output light modulated in correspondence with a signal to be transmitted and a reflective plate arranged on the back surface side of the light-emitting element. In the transmitter, the optical filter **100** may be arranged on a light output surface from which light output from the light-emitting element (hereinafter sometimes referred to as "transmission signal light") is output. When the optical filter **100** is used in the transmitter of an optical communication apparatus, the stability of optical communication can be improved. In a conventional optical communication apparatus, only measures against ambient light entering its receiver side have been taken, and the influence of ambient light entering its transmitter side has not been considered. In recent years, the following attempt has been made: the transmitter of an optical communication apparatus is mounted on a display apparatus that may be used outdoors (e.g., a digital signage), and information concerning an image displayed on the display apparatus is transmitted from the display apparatus. When an optical communication apparatus is placed outdoors, in the conventional optical communication apparatus in which measures have been taken against ambient light entering the receiver side, the stability of optical communication has been insufficient. Specifically, when ambient light enters a conventional transmitter including a light-emitting element and a reflective plate, the ambient light may be reflected by the reflective plate to be output from the transmitter. As a result, the ratio of the quantity of transmission signal light to the total quantity of light to be output from the transmitter (the contrast of the transmission signal light) reduces, and hence the stability of optical communication may reduce . In contrast, when the optical filter **100** of this embodiment is used in the transmitter of an optical communication apparatus, the entry of ambient light into the transmitter can be suppressed. Thus, a phenomenon in which the ambient light is reflected by the reflective plate of the transmitter to be output toward the receiver of the apparatus is suppressed, and hence the contrast of transmission signal light can be improved. As a result, the entry of the ambient light into the receiver is suppressed, and hence the stability of optical communication can be improved. Therefore, the optical filter **100** of the present invention may be suitably used particularly in the transmitter of an optical communication apparatus to be placed under an environment where the apparatus is exposed to ambient light, such as the outdoors.

As illustrated in FIG. **1**, the optical filter **100** may include any appropriate functional layer **20** in accordance with its applications. The functional layer **20** may be laminated on the polarizing plate **10** via a pressure-sensitive adhesive, or may be arranged with any appropriate interval between the layer and the polarizing plate **10.** In one embodiment, the functional layer **20** may be a light-diffusing layer. The light-diffusing layer is typically arranged so as to be positioned on the light-emitting element side of the polarizing plate **10** when the optical filter **100** is applied to a transmitter. When the optical filter including the light-diffusing layer is used in the transmitter, the light unevenness of the light-emitting element of the transmitter can be suppressed. Therefore, when the optical filter is applied to the transmitter of an optical communication apparatus mounted on a display apparatus, such as a digital signage, a phenomenon in which the lamp image of the light-emitting element of the transmitter is viewed on the display surface of the apparatus can be suppressed.

FIG. **2** is a schematic sectional view of an optical filter according to another embodiment of the present invention. An optical filter **101** of this embodiment includes a reflective polarizer **30** instead of the polarizing plate of the optical filter **100.** The optical filter **101** is used in the transmitter of an optical communication apparatus, and may be typically used in an optical communication apparatus including a transmitter and a receiver. In the case where the optical filter **101** of this embodiment is used in the transmitter of an optical communication apparatus, the same effect as that in the case where the optical filter **100** of FIG. **1** is used can be obtained, and the utilization efficiency of light output from the light-emitting element of the transmitter can be improved. As a result, the stability of optical communication can be improved.

FIG. **3** is a schematic sectional view of an optical filter according to still another embodiment of the present invention. An optical filter **102** of this embodiment includes the polarizing plate **10** and a λ/4 plate **40.** The λ/4 plate **40** may be laminated on the polarizing plate **10** via a pressure-sensitive adhesive, or may be arranged with any appropriate interval between the plate and the polarizing plate **10.** An angle formed by the absorption axis of the polarizer **11** and the slow axis of the λ/4 plate **40** is preferably from 38° to 52°, more preferably from 42° to 48°, most preferably about 45°.

In one embodiment, the optical filter **102** is used by being arranged so that the λ/4 plate may be on the light-emitting element side of the transmitter of an optical communication apparatus . Thus, the optical filter **102** functions as an antireflection filter. That is, ambient light entering the transmitter through the optical filter **102** is converted into circularlypolarized light by the optical filter **102**, and is then reflected in the transmitter to be converted into circularly polarized light polarized in the opposite direction. As a result, a phenomenon in which the light passes through the optical filter **102** again to be output from the transmitter is suppressed. Thus, the contrast of transmission signal light is improved, and as a result, the stability of optical communication can be improved.

The optical filter according to another embodiment of the present invention includes a reflective polarizer and a λ/4 plate. In this case, an angle formed by the reflection axis of the reflective polarizer and the slow axis of the λ/4 plate is preferably from 38° to 52°, more preferably from 42° to 48°, most preferably about 45°. The optical filter may be used by being arranged so that the reflective polarizer may be on the light-emitting element side of the transmitter of an optical communication apparatus, or may be used by being arranged so that the λ/4 plate may be on the light-emitting element side of the transmitter.

### B. Polarizing Plate

As described above, the polarizing plate typically includes the absorptive polarizer, the first protective layer laminated on one side of the polarizer, and the second protective layer laminated on the other side thereof. One of the first protective layer and the second protective layer may be omitted.

### B-1. Polarizer

Any appropriate polarizer may be adopted as the polarizer depending on purposes. For example, a resin film for forming the polarizer may be a single-layer resin film, or may be a laminate of two or more layers.

Specific examples of the polarizer including a single-layer resin film include: a polarizer obtained by subjecting a hydrophilic polymer film, such as a polyvinyl alcohol (PVA) -based film, a partially formalized PVA-based film, or an ethylene-vinyl acetate copolymer-based partially saponified film, to dyeing treatment with a dichroic substance, such as iodine or a dichroic dye, and stretching treatment; and a polyene-based aligned film, such as a dehydration-treated product of PVA or a dehydrochlorination-treated product of polyvinyl chloride. A polarizer obtained by dyeing the PVA-based film with the dichroic dye is preferably used because the polarizer is excellent in high-temperature durability. Any appropriate dichroic dye that may be used in the polarizer may be adopted as the dichroic dye. Examples of the dichroic dye include a dichroic direct dye formed of a disazo compound, a dichroic direct dye formed of a trisazo or tetrakisazo compound or the like, a liquid crystalline azo colorant, a polycyclic dye, and an (azo) dye having a sulfonic acid group.

The polarizer obtained by using the laminate is specifically, for example, a polarizer obtained by using a laminate of a resin substrate and a PVA-based resin layer (PVA-based resin film) laminated on the resin substrate, or a laminate of a resin substrate and a PVA-based resin layer formed on the resin substrate through application. The polarizer obtained by using the laminate of the resin substrate and the PVA-based resin layer formed on the resin substrate through application may be produced by, for example, a method involving: applying a PVA-based resin solution to the resin substrate; drying the solution to form the PVA-based resin layer on the resin substrate, to thereby provide the laminate of the resin substrate and the PVA-based resin layer; and stretching and dyeing the laminate to turn the PVA-based resin layer into the polarizer. In this embodiment, the stretching typically includes the stretching of the laminate under a state in which the laminate is immersed in an aqueous solution of boric acid. The stretching may further include the in-air stretching of the laminate at high temperature (e.g., 95°C or more) before the stretching in the aqueous solution of boric acid as required. The resultant laminate of the resin substrate and the polarizer may be used as it is (i.e., the resin substrate may be used as a protective layer for the polarizer). Alternatively, a product obtained as described below may be used: the resin substrate is peeled from the laminate of the resin substrate and the polarizer, and any appropriate protective layer in accordance with purposes is laminated on the peeled surface. Details of such method of producing a polarizer are described in, for example, JP 2012-73580 A, the description of which is incorporated herein by reference in its entirety.

The thickness of the polarizer is typically from 1 µm to 80 µm. The upper limit of the thickness of the polarizer is preferably 50 µm, more preferably 25 µm, particularly preferably 12 µm. The lower limit of the thickness of the polarizer is preferably 5 µm. When the thickness of the polarizer falls within such range, the curling of the polarizer at the time of its heating can be satisfactorily suppressed, and satisfactory appearance durability thereof at the time of the heating is obtained.

The transmittance (also referred to as "single layer transmittance") of the polarizer for light having a wavelength of 589 nm is preferably 41% or more, more preferably 42% or more. The theoretical upper limit of the single layer transmittance is 50%. In addition, the polarization degree of the polarizer is preferably from 99.5% to 100%, more preferably from 99.9% to 100%.

### B-2. Protective Layer

The protective layer is formed of any appropriate film that may be used as a protective film for the polarizing plate. Specific examples of a material serving as a main component of the film include transparent resins, such as a cellulose-based resin, such as triacetylcellulose (TAC), a polyester-based resin, a polyvinyl alcohol-based resin, a polycarbonate-based resin, a polyamide-based resin, a polyimide-based resin, a polyether sulfone-based resin, a polysulfone-based resin, a polystyrene-based resin, a polynorbornene-based resin, a polyolefin-based resin, a (meth)acrylic resin, and an acetate-based resin. Another example thereof is a thermosetting resin or a UV-curable resin, such as a (meth)acrylic resin, a urethane-based resin, a (meth)acrylic urethane-based resin, an epoxy-based resin, or a silicone-based resin. Still another example thereof is a glassy polymer, such as a siloxane-based polymer. In addition, a polymer film described in JP 2001-343529 A (WO 01/37007 A1) may also be used. As a material for the film, for example, there may be used a resin composition containing: a thermoplastic resin having a substituted or unsubstituted imide group in a side chain; and a thermoplastic resin having a substituted or unsubstituted phenyl group and a nitrile group in side chains. An example thereof is a resin composition containing an alternate copolymer formed of isobutene and N-methylmaleimide, and an acrylonitrile-styrene copolymer. The polymer film may be, for example, an extruded product of the resin composition . The protective layers may be identical to or different from each other.

The thickness of each of the protective layers is preferably from 10 µm to 100 µm, more preferably from 20 µm to 100 µm. Each of the protective layers may be laminated on the polarizer via an adhesion layer (specifically an adhesive layer or a pressure-sensitive adhesive layer), or may be laminated in close contact with the polarizer (without the adhesion layer interposed therebetween). The adhesive layer is formed of any appropriate adhesive. The adhesive is, for example, a water-soluble adhesive using a polyvinyl alcohol-based resin as a main component.

### C. Reflective Polarizer

The reflective polarizer has a function of transmitting polarized light in a specific polarization state (polarization direction) and reflecting light in any other polarization state. The reflective polarizer may be of a linearly polarized light separation type, or may be of a circularly polarized light separation type. When the reflective polarizer is of a linearly polarized light separation type, linearly polarized light is output from the reflective polarizer, and when the reflective polarizer is of a circularly polarized light separation type, circularly polarized light is output from the reflective polarizer.

### C-1. Linearly Polarized Light Separation-type Reflective Polarizer

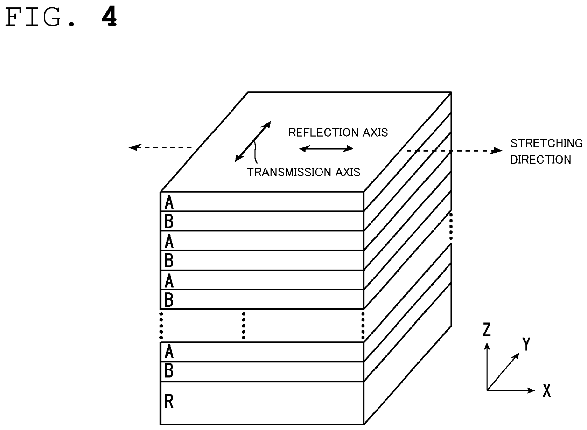

FIG. **4** is a schematic perspective view of an example of the linearly polarized light separation-type reflective polarizer. The reflective polarizer is a multilayer laminate obtained by alternately laminating a layer **A** having birefringence and a layer **B** substantially free of birefringence. For example, the total number of the layers of such multilayer laminate may be from 50 to 1,000. In the illustrated example, a refractive index nx in the x-axis direction of the layer **A** is larger than a refractive index ny in the y-axis direction thereof, and a refractive index nx in the x-axis direction of the layer **B** and a refractive index ny in the y-axis direction thereof are substantially equal to each other. Therefore, a refractive index difference between the layer **A** and the layer **B** is large in the x-axis direction, and is substantially zero in the y-axis direction. As a result, the x-axis direction serves as a reflection axis and the y-axis direction serves as a transmission axis. The refractive index difference between the layer **A** and the layer **B** in the x-axis direction is preferably from 0.2 to 0.3. The x-axis direction corresponds to the stretching direction of the reflective polarizer in a production method to be described later.

The layer **A** preferably includes a material that expresses birefringence when stretched. Typical examples of such material include naphthalenedicarboxylic acid polyester (e.g., polyethylene naphthalate), polycarbonate, and an acrylic resin (e.g., polymethyl methacrylate). Of those, polyethylene naphthalate is preferred. The layer **B** preferably includes a material that is substantially free of expressing birefringence even when stretched. A typical example of such material is a copolyester of naphthalenedicarboxylic acid and terephthalic acid.

The reflective polarizer transmits light having a first polarization direction (e.g., a p-wave) and reflects light having a second polarization direction perpendicular to the first polarization direction (e.g., a s-wave) at an interface between the layer **A** and the layer **B.** Part of the reflected light passes as light having the first polarization direction through the interface between the layer **A** and the layer **B**, and the other part thereof is reflected as light having the second polarization direction. Such reflection and transmission are repeated many times in the reflective polarizer, and hence the utilization efficiency of light can be improved.

In one embodiment, the reflective polarizer may include, as illustrated in FIG. **4**, a reflective layer **R** as an outermost layer on a light-emitting element side. When the reflective layer **R** is arranged, light that has finally returned to the outermost portion of the reflective polarizer without being utilized can be further utilized, and hence the utilization efficiency of the light can be further improved. The reflective layer **R** typically expresses a reflecting function by virtue of the multilayer structure of a polyester resin layer.

The total thickness of the reflective polarizer may be appropriately set depending on, for example, purposes and the total number of layers in the reflective polarizer. The total thickness of the reflective polarizer is preferably from 10 µm to 150 µm.

The reflective polarizer may be typically produced by combining co-extrusion and lateral stretching. The co-extrusion may be performed by any appropriate system. For example, the system may be a feed block system, or may be a multi-manifold system. For example, a material for forming the layer **A** and a material for forming the layer **B** are extruded in a feed block, and are then formed into a plurality of layers with a multiplier. Such apparatus for forming the materials into a plurality of layers is known to one skilled in the art. Next, the resultant multilayer laminate having an elongate shape is typically stretched in a direction (TD) perpendicular to its conveying direction. The material for forming the layer **A** (e.g., polyethylene naphthalate) is increased in refractive index only in the stretching direction by the lateral stretching, and as a result, expresses birefringence. The material for forming the layer **B** (e.g., a copolyester of naphthalenedicarboxylic acid and terephthalic acid) is not increased in refractive index in any direction even by the lateral stretching. As a result, a reflective polarizer having a reflection axis in the stretching direction (TD) and having a transmission axis in the conveying direction (MD) can be obtained (TD corresponds to the x-axis direction of FIG. **4**, and MD corresponds to the y-axis direction thereof). A stretching operation may be performed with any appropriate apparatus.

A polarizer described in, for example, JP 09-507308 A may be used as the reflective polarizer.

A commercially available product may be used as it is as the reflective polarizer, or the commercially available product may be subjected to secondary processing (e.g., stretching) before use. Examples of the commercially available product include a product available under the product name "APCF" from Nitto Denko Corporation, a product available under the product name "DBEF" from 3M Company, and a product available under the product name "APF" from 3M Company.

### C-2. Circularly Polarized Light Separation-type Reflective Polarizer

The circularly polarized light separation-type reflective polarizer includes, for example, a cholesteric liquid crystal film. The cholesteric liquid crystal film includes an aligned layer of a cholesteric liquid crystal polymer, and has such a characteristic as to reflect one of left-handed circularly polarized light and right-handed circularly polarized light, and to transmit the other light. The aligned layer of the cholesteric liquid crystal polymer may be formed of a cholesteric liquid crystal polymer having a constituent unit derived from an optically active group-containing monomer. The thickness of the cholesteric liquid crystal film is preferably from 1 µm to 30 µm, more preferably from 2 µm to 15 µm. The cholesteric liquid crystal film may be compounded as required with one or more kinds of additives including: a polymer except the liquid crystal polymer; an inorganic compound and an organic compound, such as a stabilizer and a plasticizer; and a metal and a compound thereof.

The circularly polarized light separation-type reflective polarizer may include a plurality of cholesteric liquid crystal films. A plurality of cholesteric liquid crystal films having different reflection wavelengths are preferably used. With such configuration, a circularly polarized light separation-type reflective polarizer that can provide transmitted circularly polarized light in a wide wavelength range can be formed.

### D. λ/4 Plate

As described above, an angle formed by the absorption axis of the polarizer (or the reflection axis of the reflective polarizer) and the slow axis of the λ/4 plate is preferably from 38° to 52°, more preferably from 42° to 48°, most preferably about 45°.

The thickness of the λ/4 plate is preferably from 1 µm to 200 µm, more preferably from 1 µm to 100 µm. The λ/4 plate preferably has a refractive index characteristic of showing a relationship of nx>ny≥nz. Herein, "ny=nz" encompasses not only a case in which ny and nz are exactly equal to each other, but also a case in which ny and nz are substantially equal to each other. Therefore, a relationship of ny<nz may be satisfied without impairing the effects of the present invention.

The in-plane retardation Re(550) of the λ/4 plate is preferably from 60 nm to 220 nm, more preferably from 80 nm to 200 nm. Linearly polarized light that is output from the polarizing plate (or the linearly polarized light separation-type reflective polarizer) and enters the λ/4 plate is converted into circularly polarized light by the λ/4 plate to be output.

The birefringence Δn_{xy} of the λ/4 plate is, for example, from 0.0025 to 0.0060, preferably from 0.0028 to 0.0050. When the birefringence is optimized within such range, the λ/4 plate that is thin and has desired optical characteristics can be obtained. The Nz coefficient of the λ/4 plate is preferably from 0.9 to 3, more preferably from 0.9 to 1.3.

The λ/4 plate contains a resin having an absolute value of its photoelastic coefficient of preferably 2×10⁻¹¹ m²/N or less, more preferably from 2.0×10⁻¹³ m²/N to 1.6×10⁻¹¹ m²/N. When the absolute value of the photoelastic coefficient falls within such range, a retardation change is less liable to be generated in the case where a shrinkage stress is generated at the time of heating.

In one embodiment, the λ/4 plate may include any appropriate resin film that may satisfy the above-described characteristics. Typical examples of such resin include a cyclic olefin-based resin, a polycarbonate-based resin, a cellulose-based resin, a polyester-based resin, a polyvinyl alcohol-based resin, a polyamide-based resin, a polyimide-based resin, a polyether-based resin, a polystyrene-based resin, and an acrylic resin. Any appropriate polycarbonate-based resin may be used as the polycarbonate-based resin as long as the effects of the present invention are obtained. Details of the polycarbonate-based resin that maybe suitably used are described in, for example, JP 2014-10291 A and JP 2014-26266 A, the descriptions of which are incorporated herein by reference.

In another embodiment, the λ/4 plate may be an alignment fixed layer of a liquid crystal compound. When the liquid crystal compound is used, a difference between nx and ny of the λ/4 plate to be obtained can be remarkably increased as compared to a non-liquid crystal material, and hence a thickness of the λ/4 plate for obtaining a desired in-plane retardation can be remarkably reduced. Typically, a rod-shaped liquid crystal compound is aligned in a state of being aligned in the slow axis direction of the λ/4 plate (homogeneous alignment). Specific examples of the liquid crystal compound and details of a method of forming the alignment fixed layer are described in JP 2006-163343 A, the description of which is incorporated herein by reference. In another embodiment, typically, a disc-shaped liquid crystal compound is aligned in any one of the following states : vertical alignment, hybrid alignment, and tilt alignment. A liquid crystal compound described in JP 2007-108732 A or JP 2010-244038 A may be preferably used as the liquid crystal compound, but the liquid crystal compound is not limited thereto.

### E. Functional Layer

Examples of the functional layer of the optical filter include a light-diffusing layer, a hard coat layer, and a transparent pressure-sensitive adhesive layer. Those layers may be used in combination, and may each be arranged at any appropriate position. In addition, the above-mentioned embodiments may be appropriately combined, and the configurations in the embodiments may each be replaced with an optically equivalent configuration.

### E-1. Light-diffusing Layer

The light-diffusing layer typically includes a light-diffusing element. The light-diffusing element includes a matrix and light-diffusible fine particles dispersed in the matrix.

The light-diffusing performance of the light-diffusing layer may be represented by, for example, a haze value and/or a light-diffusing half-value angle. The haze value of the light-diffusing layer is preferably from 10% to 99%, more preferably from 20% to 95%. When the haze value is set within the range, desired diffusing performance is obtained, and hence the output direction of the light from the polarizing plate **10** can be expanded. As a result, the setting contributes to an improvement in communication stability of the optical communication apparatus. The light-diffusing half-value angle of the light-diffusing layer is preferably from 5° to 70°, more preferably from 10° to 60°. The light-diffusing performance of the light-diffusing layer may be controlled by adjusting, for example, a constituent material for the matrix, and a constituent material for, and the volume-average particle diameter and compounding amount of, the light-diffusible fine particles.

The total light transmittance of the light-diffusing layer is preferably 75% or more, more preferably 80% or more, still more preferably 85% or more.

The thickness of the light-diffusing layer may be appropriately adjusted depending on, for example, its configuration and diffusing performance. The thickness of the light-diffusing layer is preferably from 5 µm to 200 µm.

The matrix includes, for example, an ionizing radiation-curable resin. An ionizing radiation is, for example, UV light, visible light, an infrared ray, or an electron beam. Of those, UV light is preferred. Therefore, the matrix preferably includes a UV-curable resin. Examples of the UV-curable resin include an acrylic resin, an aliphatic (e.g., polyolefin) resin, and a urethane-based resin.

Any appropriate light-diffusible fine particles may be used as the light-diffusible fine particles. Details of the light-diffusible fine particles are described in, for example, JP 2014-224964 A, the description of which is incorporated herein by reference in its entirety.

In one embodiment, the matrix of the light-diffusing element contains a resin component and an ultrafine particle component, and a refractive index modulation region in which a refractive index changes in a substantially continuous manner is formed outside the vicinity of the surfaces of the light-diffusible fine particles. Details of such light-diffusing element are described in, for example, JP 2012-88692 A, the description of which is incorporated herein by reference in its entirety. Such light-diffusing element can achieve low backscattering and a high haze.

### E-2. Hard Coat Layer

The hard coat layer has a hardness of preferably H or more, more preferably 3H or more, still more preferably 4H or more in a pencil hardness test. The pencil hardness test may be performed in conformity with JIS K 5400.

The thickness of the hard coat layer is typically from 1 µm to 30 µm, preferably from 2 µm to 20 µm, more preferably from 3 µm to 15 µm.

The hard coat layer may be a cured layer of any appropriate curable compound. Examples of the curable compound include: a thermosetting resin monomer or oligomer; and an ionizing radiation-curable resin monomer or oligomer. Of those, an ionizing radiation-curable resin monomer or oligomer is preferred. This is because the monomer or the oligomer exhibits such advantageous effects as described below: the monomer or the oligomer has satisfactory processability; and the monomer or the oligomer is less liable to cause heat damage to a transparent film.

Examples of the thermosetting resin monomer or oligomer include monomers and oligomers for an acrylic resin, polycarbonate, and polystyrene. The thermosetting resin also includes a resin that is cured by volatilizing its solvent with heat.

The ionizing radiation-curable resin monomer or oligomer is typically, for example, a curable compound that is cured with UV light or an electron beam. Examples of the ionizing radiation-curable resin monomer or oligomer include monomers or oligomers each having a polymerizable unsaturated linking group, such as a (meth)acrylate group (the term "(meth)acrylate" refers to an acrylate or/and a methacrylate) or a (meth) acryloyloxy group, an epoxy group, or the like in a molecule thereof. The oligomer includes a prepolymer.

Specific examples of the oligomer include (meth)acrylates, such as urethane (meth)acrylate, polyester (meth)acrylate, and epoxy (meth)acrylate, silicon resins, such as a siloxane, unsaturated polyester, and an epoxy. Specific examples of the monomer include styrene-based monomers, such as α-methylstyrene, methyl (meth)acrylate, 2-ethylhexyl (meth)acrylate, dipentaerythritol hexa(meth)acrylate, dipentaerythritol penta(meth)acrylate, trimethylolpropane tri(meth)acrylate, urethane (meth)acrylate, and a polyol compound having two or more thiol groups in a molecule thereof. The curable compound for forming the hard coat layer has a molecular weight that falls within the range of, for example, from 200 to 10,000.

In general, a photopolymerization initiator is added to the ionizing radiation-curable resin monomer or oligomer. Examples of the photopolymerization initiator include 2,2-dimethoxy-2-phenylacetophenone, acetophenone, benzophenone, xanthone, 3-methylacetophenone, 4-chlorobenzophenone, 4,4'-dimethoxybenzophenone, benzoin propyl ether, benzyl dimethyl ketal, N,N,N',N'-tetramethyl-4,4'-diaminobenzophenone, 1-(4-isopropylphenyl)-2-hydroxy-2-methylpropan-1-one, and other thioxanthone-based compounds.

A composition for forming the hard coat layer may contain a UV absorber. When the UV absorber is used, the hard coat layer may also function as a UV-absorbing layer. Thus, when the optical filter is used in an optical communication apparatus mounted on a display apparatus that may be used outdoors, such as a digital signage, damage to its display plate (display panel) by UV light in sunlight can be suppressed. The composition for forming the hard coat layer may contain any other additive. Examples of the additive include fine particles, a filler, a dispersant, a plasticizer, a surfactant, an antioxidant, and a thixotropic agent.

### E-3. Transparent Pressure-sensitive Adhesive Layer

The transparent pressure-sensitive adhesive layer is formed of any appropriate pressure-sensitive adhesive. An acrylic pressure-sensitive adhesive is typically used. The thickness of the transparent pressure-sensitive adhesive layer is preferably from 7 µm to 25 µm. The transparent pressure-sensitive adhesive layer may contain a UV absorber. When the UV absorber is used, the transparent pressure-sensitive adhesive layer may also function as a UV-absorbing layer. Thus, when the optical filter is used in an optical communication apparatus mounted on a display apparatus that may be used outdoors, such as a digital signage, damage to its display plate (display panel) by UV light in sunlight can be suppressed. The transparent pressure-sensitive adhesive layer may contain any other additive. Examples of the additive include any appropriate resin component, a tackifier, an inorganic filler, an organic filler, metal powder, a pigment, a foil-like substance, a softener, a plasticizer, an age resistor, a conductive agent, an antioxidant, a light stabilizer, a surface lubricant, a leveling agent, a corrosion inhibitor, a heat stabilizer, a polymerization inhibitor, and a lubricant. In one embodiment, the transparent pressure-sensitive adhesive layer is arranged on the outermost surface on one side of the optical filter, and may function as a pressure-sensitive adhesive layer at the time of the bonding of the optical filter to the display plate of a display apparatus, such as a digital signage.

### F. Optical Communication Apparatus

The optical filters described in the sections A to E may each be applied to the transmitter of an optical communication apparatus. Therefore, the present invention also encompasses a transmitter and an optical communication apparatus each using any such optical filter. The optical communication apparatus includes a transmitter and a receiver. The transmitter may include a light-emitting element and a reflective plate arranged on the back surface side of the light-emitting element. The light-emitting element may include any appropriate element that can output light (typically visible light) modulated in correspondence with a signal to be transmitted, and is typically a LED. The receiver may include a light-receiving element. The light-receiving element may include any appropriate element that can detect light output from the transmitter, and is typically a photodiode.

The reflective plate is typically arranged on the side of the light-emitting element opposite to the polarizer. Thus, the light output from the light-emitting element backward (toward the side opposite to the polarizer) may be reflected forward by the reflective plate. In particular, the polarization state of the polarized light reflected backward (toward the light-emitting element) by the reflective polarizer may be converted, and the polarized light may be reflected forward. As a result, the utilization efficiency of the light output from the light-emitting element can be improved.

The reflectance of the reflective plate is preferably 40% or more, more preferably 80% or more. Thus, the utilization efficiency of the light output from the light-emitting element can be further improved.

The reflective plate may include any appropriate material as long as the material has a reflecting function. The reflective plate may be a mirror-surface reflective plate (mirror), or may be a diffusing reflective plate (white plate) . For example, a metal sheet or metal foil made of aluminum, silver, stainless steel, or the like serving as a metal having a high reflectance, and a laminate of a substrate and the metal sheet or the metal foil may each be used as the mirror-surface reflective plate. For example, a resin film having fine unevenness for diffusing and reflecting incident light formed on its surface, a deposited sheet obtained by depositing aluminum or the like from the vapor onto a substrate, or a laminate of a substrate and a diffusing layer obtained by mixing many reflective beads may be used as the diffusing reflective plate.

### Examples

Now, the present invention is specifically described by way of Examples. However, the present invention is by no means limited to these Examples. A method of evaluating the contrast of the transmission signal light of a transmitter using an optical filter is as described below.

### <Evaluation Method>

A reflective plate (white reflective plate, reflectance: 88%), a LED light source (manufactured by Aitec System Co., Ltd., product name: "LPDPP1-24100NCW") serving as a light-emitting element, a light-diffusing sheet (polystyrene sheet, haze: 82%, half-value angle: 58°), and an optical filter were arranged in the stated order. The configuration artificially reproduces the configuration of the transmitter of an optical communication apparatus.

A brightness meter (manufactured by Konica Minolta, Inc., product name: "LS-110") was arranged on the side of the optical filter opposite to the LED light source so as to face the optical filter with an interval of 22 cm therebetween. In addition, a spot light source (manufactured by Hayashi Watch-Works Co., Ltd., product name: "LA-HDF108A") serving as ambient light was arranged on the side of the optical filter opposite to the LED light source so as to irradiate the surface of the optical filter with light from a position distant by 19 cm at an angle of incidence of 30°. The quantity of light to be output from the LED light source was adjusted so that a brightness measured with the brightness meter when only the LED light source was lit under a state in which the optical filter was removed became 2,739 cd/m², and the quantity of light to be output from the spot light source was adjusted so that a brightness measured with the brightness meter when only the spot light source was lit under a state in which the optical filter was removed became 1,510 cd/m².

Under a state in which an optical filter of each of Examples and Comparative Example was arranged, a brightness A when the LED light source and the spot light source were lit, and a brightness B when only the LED light source was lit were measured with the brightness meter. Further, a ratio B/A was calculated as an indicator of the contrast of the transmission signal light of the transmitter using the optical filter. The ratio B/A is preferably 0.70 or more, more preferably 0.80 or more.

### <Reference Example 1>

A brightness measured with the brightness meter when the LED light source and the spot light source were lit under a state in which the optical filter was removed was 4,440 cd/m². In addition, the indicator (B/A) of the contrast of the transmission signal light of the transmitter in a state in which the optical filter was removed was 0.62.

### <Production Example 1>

A λ/4 plate was produced by obliquely stretching a cycloolefin-based resin film (manufactured by Zeon Corporation, "ZEONOR ZF-14 FILM") with a tenter stretching machine at a stretching angle of 45°.

### <Production Example 2>

A polyvinyl alcohol film having a thickness of 80 µm was stretched to 3 times between rolls having different speed ratios while being dyed in an iodine solution at 30°C having a concentration of 0.3% for 1 minute. After that, the film was stretched until the total stretching ratio became 6 times while being immersed in an aqueous solution at 60°C containing boric acid at a concentration of 4% and potassium iodide at a concentration of 10% for 0.5 minute. Subsequently, the film was washed by being immersed in an aqueous solution at 30°C containing potassium iodide at a concentration of 1.5% for 10 seconds, and was then dried at 50°C for 4 minutes to provide an absorptive polarizer. To each of both surfaces of the polarizer, a saponified triacetylcellulose film having a thickness of 80 µm was bonded through the use of a polyvinyl alcohol-based adhesive. Thus, a polarizing plate was produced.

### <Example 1>

A linearly polarized light separation-type reflective polarizer (manufactured by 3M Company, product name: "DBEF") was used as an optical filter of this example. The optical filter was subjected to the evaluation of the contrast of the transmission signal light of the transmitter. The result is shown in Table 1.

### <Example 2>

An optical filter was produced by bonding a linearly polarized light separation-type reflective polarizer (manufactured by 3M Company, product name: "DBEF") and the λ/4 plate of Production Example 1 described above via a pressure-sensitive adhesive so that an angle formed by the reflection axis of the reflective polarizer and the slow axis of the λ/4 plate became 45°.

The optical filter was arranged so that the λ/4 plate was on a diffusing sheet side, and the filter was subjected to the evaluation of the contrast of the transmission signal light of the transmitter. The result is shown in Table 1.

### <Example 3>

The polarizing plate of Production Example 2 described above was used as an optical filter of this example. The optical filter was subjected to the evaluation of the contrast of the transmission signal light of the transmitter. The result is shown in Table 1.

### <Example 4>

An optical filter was produced by bonding the polarizing plate of Production Example 2 described above and the λ/4 plate of Production Example 1 described above via a pressure-sensitive adhesive so that an angle formed by the absorption axis of the polarizer and the slow axis of the λ/4 plate became 45°.

The optical filter was arranged so that the λ/4 plate was on a diffusing sheet side, and the filter was subjected to the evaluation of the contrast of the transmission signal light of the transmitter. The result is shown in Table 1.

### <Comparative Example 1>

A polyethylene terephthalate (PET) film (thickness: 120 µm) was used as an optical filter of this comparative example. The optical filter was subjected to the evaluation of the contrast of the transmission signal light of the transmitter. The result is shown in Table 1.

**Table 1**

| | Configuration of optical filter | Brightness (cd/m²) | | Contrast indicator (B/A) |
|---|---|---|---|---|
| | | At the time of lighting of LED light source and spot light source (A) | At the time of lighting of LED light source (B) | |
| Example 1 | Reflective polarizer | 2,038 | 1, 647 | 0.81 |
| Example 2 | Reflective polarizer-A/4 plate | 2,110 | 1,761 | 0.83 |
| Example 3 | Polarizing plate | 1,362 | 1,147 | 0. 84 |
| Example 4 | Polarizing plate-λ/4 plate | 1,304 | 1,137 | 0.87 |
| Comparative Example 1 | PET film | 4,121 | 2,595 | 0.63 |
| Reference Example 1 | None | 4,440 | 2,739 | 0.62 |

In each of the case where no optical filter was used as shown in Reference Example 1 and the case where the PET film was used as an optical filter in the transmitter as shown in Comparative Example 1, the indicator of the contrast of the transmission signal light was less than 0.80. In contrast, in the case where any one of the optical filters of Examples 1 to 4 was used in the transmitter, the indicator of the contrast of the transmission signal light was 0.80 or more.

### Industrial Applicability

The optical filter of the present invention may be suitably used in an optical communication apparatus, and the optical communication apparatus may be suitably used in a digital signage.

### Reference Signs List

- **10**: polarizing plate
- **11**: polarizer
- **12**: first protective layer
- **13**: second protective layer
- **20**: functional layer
- **30**: reflective polarizer
- **40**: λ/4 plate
- **100**: optical filter
- **101**: optical filter
- **102**: optical filter

## Claims

1. An optical filter, comprising a polarizing plate, wherein the optical filter is used in a transmitter of an optical communication apparatus.

2. The optical filter according to claim 1, further comprising a λ/4 plate,
wherein the polarizing plate includes a polarizer and a protective layer arranged on at least one side of the polarizer,
wherein an angle formed by an absorption axis of the polarizer and a slow axis of the λ/4 plate is from 38° to 52°, and
wherein the optical filter is used by being arranged so that the λ/4 plate is on a light-emitting element side of the transmitter.

3. An optical filter, comprising a reflective polarizer, wherein the optical filter is used in a transmitter of an optical communication apparatus.

4. The optical filter according to claim 3, further comprising a λ/4 plate,
wherein an angle formed by a reflection axis of the reflective polarizer and a slow axis of the λ/4 plate is from 38° to 52°, and
wherein the optical filter is used by being arranged so that the λ/4 plate is on a light-emitting element side of the transmitter.

5. The optical filter according to any one of claims 1 to 4, further comprising a light-diffusing layer.

6. An optical communication apparatus, comprising the optical filter of any one of claims 1 to 5.

7. The optical communication apparatus according to claim 6, further comprising a reflective plate.

8. The optical communication apparatus according to claim 7, wherein the reflective plate has a reflectance of 40% or more.
